# EUROPEAN PATENT APPLICATION

(11) **EP 4 481 340 A1**
(43) Date of publication of application: **25.12.2024**
(21) Application number: 23180116.8
(22) Date of filing: 19.06.2023
(51) Int. Cl.: G01H 9/00, G01S 13/08, G01S 13/36

(54) **VIBRATION ESTIMATION SYSTEM WITH AIMING ARRANGEMENT**

(71) Applicant: Rosemount Tank Radar AB, 435 23 Mölnlycke (SE)
(72) Inventor: DELIN, Håkan, 585 93 LINKÖPING (SE); NILSSON, Cornelia, 412 76 GÖTEBORG (SE)
(74) Representative: Kransell & Wennborg KB

(57) **Abstract**

A vibration estimation system for estimating vibration of at least one target, comprising a transceiver; a radiating antenna arranged and configured to radiate an electromagnetic transmit signal from the transceiver in a transmission direction with a radiation pattern comprising a main lobe having a distance-dependent extension in a plane perpendicular to the transmission direction, and to return to the transceiver an electromagnetic reflection signal resulting from reflection of the transmit signal at the at least one target, when the at least one target is located within the distance-dependent extension of the main lobe of the transmit signal; processing circuitry coupled to the transceiver and configured to estimate the vibration of the target based on a difference between the transmit signal and the reflection signal; and an aiming arrangement arranged and configured to provide a visible aiming pattern visually indicating the distance-dependent extension of the main lobe of the transmit signal.

## Description

### Technical Field of the Invention

The present invention relates to a vibration estimation system, and to a method of estimating vibration of a target.

### Technical Background

Vibration monitoring of various installations, such as pipes or machinery is used to obtain indications of the state of a process or the installations themselves.

For vibration monitoring, it is known to use accelerometers attached to targets to be monitored.

To overcome drawbacks of installations with permanently mounted accelerometers, it has been proposed to use high-precision distance measuring techniques, such as certain radar techniques for contactless estimation of vibrations.

In the case of radar techniques, it may, however, be challenging to ascertain that it is the vibration of the intended target(s) that is estimated, and not the vibration of some other structure.

It would thus be desirable to provide for improved radar-based vibration estimation, in particular increasing the likelihood that it is the vibration of the intended target(s) that is estimated, and not the vibration of some other structure.

### Summary of the Invention

In view of the above, a general object of the present invention is to provide for improved radar-based vibration estimation, in particular increasing the likelihood that it is the vibration of the intended target(s) that is estimated, and not the vibration of some other structure.

According to a first aspect of the present invention, it is therefore provided a vibration estimation system for estimating vibration of at least one target, comprising: a transceiver configured to generate, transmit, and receive electromagnetic signals; a radiating antenna coupled to the transceiver and arranged and configured to radiate an electromagnetic transmit signal from the transceiver in a transmission direction with a radiation pattern comprising a main lobe having a distance-dependent extension in a plane perpendicular to the transmission direction, and to return to the transceiver an electromagnetic reflection signal resulting from reflection of the transmit signal at the at least one target, when the at least one target is located within the distance-dependent extension of the main lobe of the transmit signal; processing circuitry coupled to the transceiver and configured to estimate the vibration of the target based on a difference between the transmit signal and the reflection signal; and an aiming arrangement arranged and configured to provide a visible aiming pattern visually indicating the distance-dependent extension of the main lobe of the transmit signal.

The present invention is based on the realization that the usability and/or performance of a radar-based vibration estimation system can be improved by providing the system with an aiming arrangement arranged and configured to provide a visible aiming pattern visually indicating the distance-dependent extension of the main lobe of the transmit signal that is radiated towards the at least one target for the vibration estimation. In particular, the synchronization of the aiming pattern with the extension of the main lobe in a plane perpendicular to the transmission direction of the transmit signal facilitates aiming of the radiating antenna towards the at least one target. In the case of a single target, it may be sufficient to aim the system so that the target is within the extension of the main lobe, and it will also be apparent to the operator when the aiming is "good enough". This may reduce the time needed for setup of the vibration estimation system. Furthermore, when it is desired to use the vibration estimation system for estimating the vibration of each target of a plurality of targets, the operator will be able to determine, using the visible aiming pattern, if all of the targets can actually fit within the distance-dependent extension of the main lobe, or if the mounting location of the vibration estimation system needs to be modified.

In examples of the vibration estimation system, the aiming arrangement may be mechanically coupled to the radiating antenna, in such a way that movement of the radiating antenna results in corresponding movement of the aiming arrangement. This provides for simple and reliable aiming of the vibration estimation system.

In examples, the aiming arrangement may comprise a laser.

In some example, the aiming arrangement may comprises a laser and a holographic pattern generator arranged to form the aiming pattern. In other examples, the aiming arrangement may comprises an actuator moving the laser to form the aiming pattern. Combinations of these examples would also be possible.

In examples, the aiming arrangement may be configured to provide an aiming pattern comprising a plurality of concentric geometric forms substantially coinciding with at least a shape of the distance-dependent extension of the main lobe of the transmit signal. In particular an outermost one of the concentric geometric forms (the one circumscribing the largest area) may define the approximate boundary of the main lobe at different distances from the radiating antenna. An effect of this may be that an operator installing the vibration estimation system and/or adds a target etc can easily determine whether the target(s) are at all radiated by the energy of the main lobe. Furthermore, smaller concentric geometric forms, inside the outermost concentric geometric forms, may indicate to the operator that positioning of the target(s) within such a smaller concentric geometric form may contribute to improving the performance of the vibration estimation system.

According to examples of the vibration estimation system, the transmit signal may exhibit a time-varying frequency; the transceiver may be configured to form a measurement signal indicative of the difference between the transmit signal and the reflection signal; and the processing circuitry may be configured to estimate the vibration of the target based on the measurement signal.

The measurement signal may be indicative of at least a phase difference between the transmit signal and the reflection signal. Analysis of the phase difference between the reflection signal and the transmit signal can provide considerably higher accuracy (in the order of microns or better for typical frequency ranges and measurement sweep configurations) than analysis of the frequency difference between the reflection signal and the transmit signal (in the order of mm for typical frequency ranges and measurement sweep configurations).

For this measurement technique, CW (continuous wave) or FMCW (frequency modulated continuous wave) radar systems may be used. Such radar systems are, *per* se, well-known to one of ordinary skill in the art. In conventional contactless filling level determination systems using FMCW-techniques, phase information is generally not used, because the relation between the phase information and distance is not unambiguous for typical distance ranges. The present inventors have realized that this is not a problem for vibration estimation, because the vibration amplitude is generally so small that the distance variation over time can be unambiguously determined using the more accurate phase difference measurement.

According to a second aspect of the present invention, it is provided a method of estimating vibration of a target, using a vibration estimation system comprising a transceiver, a radiating antenna coupled to the transceiver; processing circuitry coupled to the transceiver; and an aiming arrangement, the method comprising: generating, by the transceiver, an electromagnetic transmit signal; radiating, by the radiating antenna, the transmit signal in a transmission direction with a radiation pattern comprising a main lobe having a distance-dependent extension in a plane perpendicular to the transmission direction; returning, by the radiating antenna to the transceiver, an electromagnetic reflection signal resulting from reflection of the transmit signal at the at least one target, when the at least one target is located within the distance-dependent extension of the main lobe of the transmit signal; estimating, by the processing circuitry, the vibration of the target based on a difference between the transmit signal and the reflection signal; and providing, by the aiming arrangement, a visible aiming pattern visually indicating the distance-dependent extension of the main lobe of the transmit signal.

Further embodiments of, and effects obtained through this second aspect of the present invention are largely analogous to those described above for the first aspect of the invention.

### Brief Description of the Drawings

These and other aspects of the present invention will now be described in more detail, with reference to the appended drawings showing an example embodiment of the invention, wherein:
Fig 1 schematically shows an example vibration estimation situation for the vibration estimation system according to examples of the present invention;
Fig 2 is a portion of the vibration estimation situation in fig 1 as seen from the vibration estimation system;
Fig 3 is a schematic illustration of a vibration estimation system according to an example of the present invention, also schematically illustrating a distance dependent extension of the main lobe of the radiation pattern of the vibration estimation system and a visible aiming pattern;
Fig 4 is an enlarged portion of the illustration in fig 3, showing a functional schematic representation of the vibration estimation system in fig 3;
Fig 5 schematically shows an example of a visible aiming pattern provided by the aiming arrangement of the vibration estimation system according to examples of the invention;
Fig 6 is a simplified illustration of the portion of the vibration estimation situation in fig 1 as seen from the vibration estimation system, including operator guidance provided by the visible aiming pattern;
Fig 7 is another example of an aiming arrangement that can be comprised in the vibration estimation system according to examples of the invention; and
Fig 8 is a flowchart illustrating an example of a method according to the present invention.

### Detailed Description of Example Embodiments of the Invention

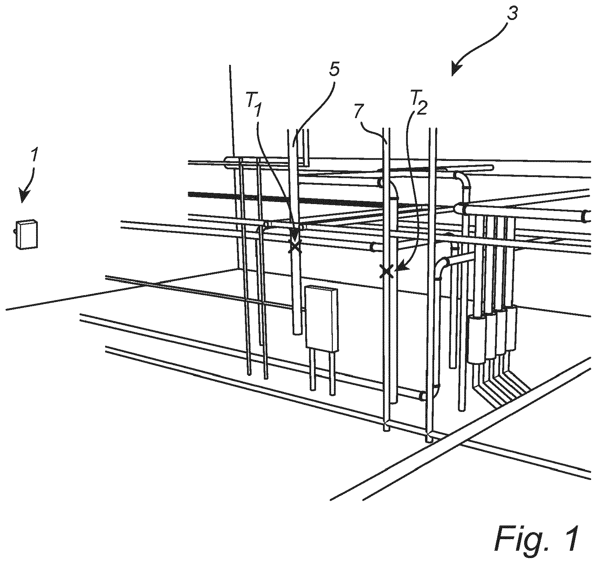

Fig 1 schematically shows an example vibration estimation situation for the vibration estimation system 1 according to examples of the present invention. The vibration estimation situation in fig 1 involves remote estimation, such as monitoring, of vibration in the exemplary setting of a process facility 3, which may, for example, be a factory for manufacturing chemicals. It should be understood that the example vibration estimation situation of fig 1 represents one example only of various possible and beneficial uses of examples of the vibration estimation system according to the present invention. Other uses include, for instance, vibration estimation of targets in machinery, buildings, structures, etc. Nevertheless, the process facility 3 in fig 1 may serve as an illustrative example of a setting where the contactless vibration estimation provided by the vibration estimation system 1 according to examples of the present invention may be beneficial.

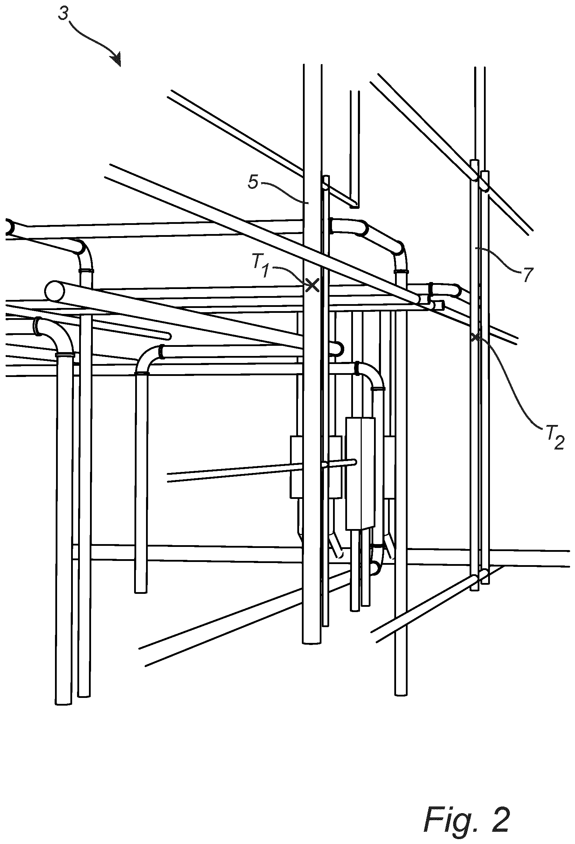

As an example, it may be desirable to estimate vibration of a first target T₁ on a first structure 5 and a second target T₂ on a second structure 7 using the vibration estimation system 1. The first structure 5 is closer to the vibration estimation system 1 than the second structure 7, and to the left of the second structure 7, as seen from the vibration estimation system 1. The first target T₁ is higher than the second target T₂, as seen from the vibration estimation system 1. This is schematically illustrated in fig 2, which is a portion of the vibration estimation situation in fig 1 as seen from the vibration estimation system 1. Since the vibration estimation system 1 uses radar signals for remote contactless vibration estimation, it would be challenging for an operator to direct the vibration estimation system 1 to enable vibration estimation for both the first target T₁ and the second target T₂. This may particularly be the case in a complex vibration estimation situation such as that in fig 1, since it may then be beneficial to configure the vibration estimation system to provide radar signals within a relatively narrow main lobe, to reduce the amount of spurious reflections etc.

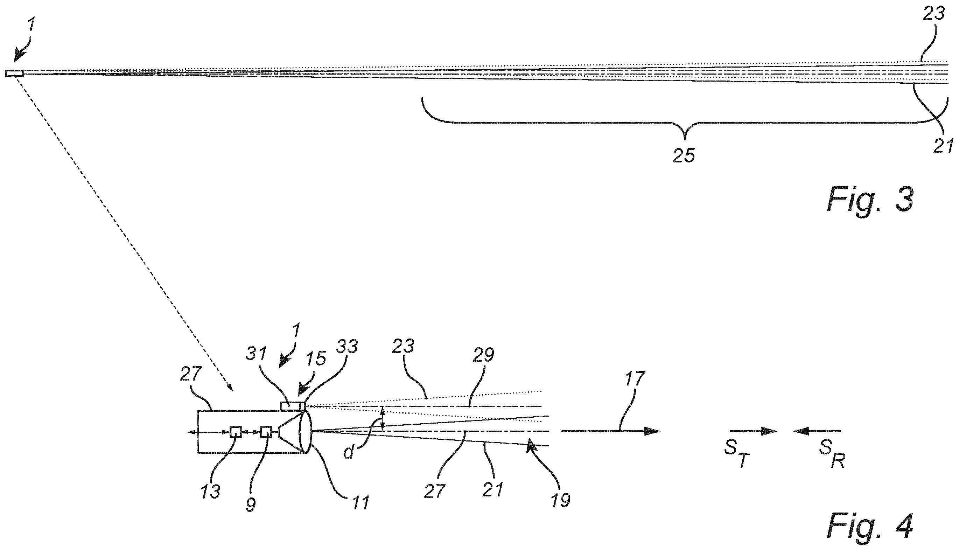

Fig 3 is a schematic illustration of a vibration estimation system 1 according to an example of the present invention, also schematically illustrating a distance dependent extension of the main lobe 19 of the radiation pattern of the vibration estimation system 1 and a distance dependent extension of a visible aiming pattern. In fig 3, the distance dependent extension of the main lobe 19 of the radiation pattern of the vibration estimation system is indicated by the solid lines 21, and the distance dependent extension of the visible aiming pattern is indicated by the dotted lines 23.

Fig 4 is an enlarged portion of the illustration in fig 3, showing a functional schematic representation of the vibration estimation system 1 in fig 3. Referring to fig 4, the vibration estimation system 1 comprises a transceiver 9, a radiating antenna 11, processing circuitry 13, and an aiming arrangement 15. The transceiver 9 is configured to generate, transmit, and receive electromagnetic signals. The radiating antenna 11, which is here exemplified by a dielectric lens antenna, is coupled to the transceiver 9 and arranged and configured to radiate an electromagnetic transmit signal S_{T} from the transceiver 9 in a transmission direction 17 with a radiation pattern comprising a main lobe 19 having a distance-dependent extension, indicated by the solid lines 21, in a plane perpendicular to the transmission direction 17, and to return to the transceiver 9 an electromagnetic reflection signal S_{R} resulting from reflection of the transmit signal S_{T} at the at least one target T₁, T₂ (referring to fig 1 and fig 2), when the at least one target T₁, T₂ is located within the distance-dependent extension of the main lobe 19 of the transmit signal S_{T}. The processing circuitry 13 is coupled to the transceiver 9 and configured to estimate the vibration of the target T₁, T₂ based on a difference between the transmit signal S_{T} and the reflection signal S_{R}. The aiming arrangement 15 is arranged and configured to provide a visible aiming pattern, indicated by the dotted lines 23, visually indicating the distance-dependent extension of the main lobe of the transmit signal, at least in a far field within a vibration estimation range 25 (schematically indicated in fig 3) for the vibration estimation system 1.

It should be noted that the processing circuitry 13 does not need to be embodied by a single unit, but that the processing circuitry 13 may be embodied as a distributed system. For instance, part of, or all, the processing performed by the processing circuitry 13 may take place at a location different from the location of the transceiver 9 or may be distributed. For example, processing may take place in the cloud and/or in a remote device.

As is schematically indicated in fig 4, the aiming arrangement 15 may be mechanically coupled to the radiating antenna 11, in this case via the housing 27 of the vibration estimation system 1. Thereby, movement of the radiating antenna 11 will result in corresponding movement of the aiming arrangement 15. In the example configuration of fig 3 and fig 4, the aiming arrangement 15 is fixed to the housing 27 of the vibration estimation system 1, and is arranged to provide light in a visible aiming pattern centered around a symmetry axis 29 for the visible aiming pattern. This symmetry axis 29 is, in the example shown in fig 3 and fig 4, substantially parallel to the symmetry axis 31 of the main lobe 19 of the transmit signal S_{T}. As is evident from the illustration in fig 3, and in particular from the enlargement in fig 4, the offset distance d between the symmetry axis 29 of the aiming pattern and the symmetry axis 31 of the main lobe 19 results in a discrepancy between the main lobe 19 (solid lines 21) and the aiming pattern (dotted lines 23) in a near zone close to the vibration estimation system 1. In the vibration estimation range 25 for the vibration estimation system 1, there is almost complete overlap between the main lobe 19 and the aiming pattern, as can be seen in fig 3. In embodiments with a fixedly mounted and stationary aiming arrangement 15 as in figs 3 and 4, the vibration estimation range 25 may be tuned by tilting the aiming arrangement 15 (the symmetry axis 29 of the aiming pattern) in relation to the symmetry axis 27 of the main lobe 19.

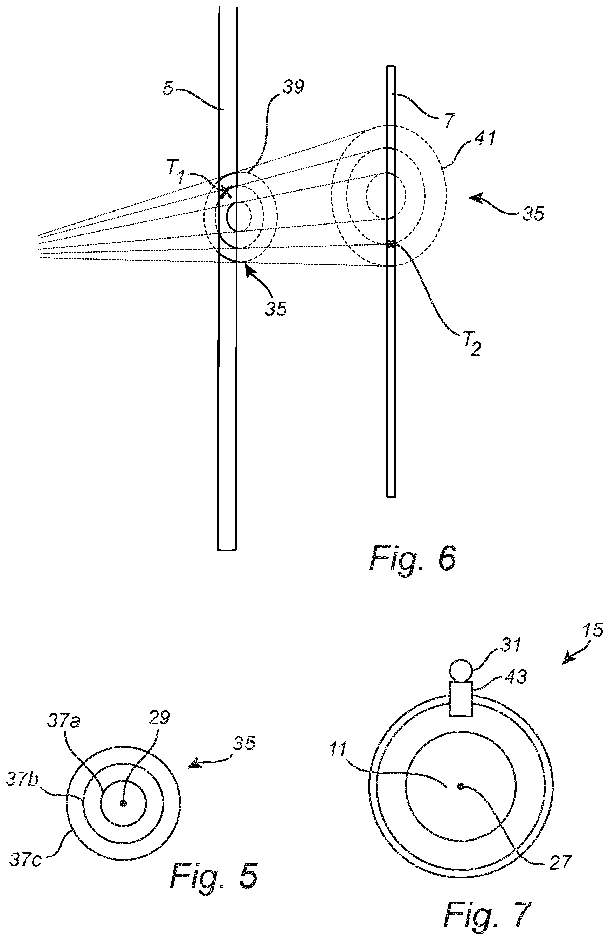

The aiming arrangement 15 may advantageously comprise a laser 31. In examples, such as the example in fig 3 and fig 4 with a fixedly mounted aiming arrangement 15, the aiming arrangement 15 may advantageously further comprise a holographic pattern generator 33 arranged to modify light emitted by the laser 31 to form the aiming pattern. An example of a suitable aiming pattern 35, or rather a projection on a surface of an aiming pattern 35, is schematically shown in fig 5. As can be seen in fig 5, the aiming pattern 35 may comprise a plurality of concentric geometric forms substantially coinciding with the distance-dependent extension of the main lobe 19 of the transmit signal S_{T}. In the example of fig 5, the aiming pattern 35 is shown to comprise a set of concentric circles 37a-c around the symmetry axis 29 for the aiming pattern 35. It should, however, be noted that the concentric geometric forms may be any other suitable form, depending on the configuration of the holographic pattern generator.

Fig 6 is a simplified illustration of the portion of the vibration estimation situation in fig 1 that was also shown in fig 2, but now including operator guidance provided by the visible aiming pattern 35. As should be clear from a comparison between fig 2 and fig 6, the visible aiming pattern 35 greatly facilitates for the operator to direct the vibration estimation system 1 (direct the main lobe 19) is such a way that vibration estimation can be performed for both the first target T₁ on the first structure 5 and the second target T₂ on the second structure 7. In fig 6, the inner dashed circle 39 indicates the (maximum) extension of the aiming pattern 35 at the distance of the first target T₁, and the outer dashed circle 41 indicates the (maximum) extension of the aiming pattern 35 at the distance of the second target T₂. Through the provision of the visible aiming pattern 35 visually indicating the distance-dependent extension of the main lobe of the transmit signal S_{T}, it is possible for the operator to ascertain that the vibration can be estimated for both the first target T₁ (at a first distance from the vibration estimation system 1) and the second target T₂ (at a second distance from the vibration estimation system 1). This would not have been possible for the operator using an aiming arrangement simply providing a ray of laser light along the transmission direction 17 of the transmit signal S_{T}, because such a ray would not hit the first structure 5 and also not the second structure 7, thus providing no guidance for the operator, in the vibration estimation situation of fig 6.

Fig 7 is another example of an aiming arrangement 15 that can be comprised in the vibration estimation system 1 according to examples of the invention, where the aiming arrangement comprises an actuator 43 moving the laser 31 around the symmetry axis 27 of the main lobe 19 to form the aiming pattern. With this configuration, the symmetry axis 29 of the aiming pattern can be made to coincide with the symmetry axis 27 of the main lobe 19. This configuration would have the advantage of enabling the visible aiming pattern to visually indicate the distance-dependent extension of the main lobe 19 of the transmit signal S_{T} correctly at all distances, in particular also at short distances. For most applications and vibrations estimation situations, it is, however, expected that the fixed coupling schematically shown in fig 4 would provide sufficient guidance for aiming the vibration estimation system 1.

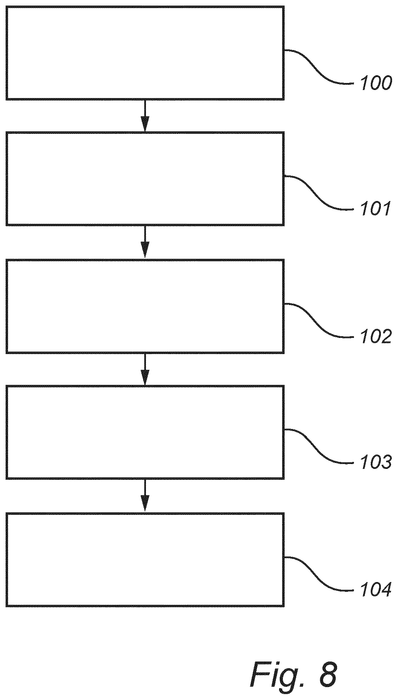

Fig 8 is a flowchart illustrating an example of the method according to the present invention. Referring mainly to fig 8 and to fig 4, the method involves generating 100, by the transceiver 9, an electromagnetic transmit signal S_{T}, radiating 101, by the radiating antenna 11, the transmit signal S_{T} in a transmission direction 17 with a radiation pattern comprising a main lobe 19 having a distance-dependent extension in a plane perpendicular to the transmission direction 17, and returning 102, by the radiating antenna 11 to the transceiver 9, an electromagnetic reflection signal S_{R} resulting from reflection of the transmit signal S_{T} at the at least one target T₁, T₂, when the at least one target is located within the distance-dependent extension of the main lobe 19 of the transmit signal S_{T}. Further, the method comprises estimating 103, by the processing circuitry 13, the vibration of the target T₁, T₂ based on a difference between the transmit signal S_{T} and the reflection signal S_{R}; and providing 104, by the aiming arrangement 15, a visible aiming pattern 35 visually indicating the distance-dependent extension of the main lobe 19 of the transmit signal S_{T}. The vibration estimation system 1 may, of course, provide at least one indication of the estimated vibration(s), to allow monitoring of the vibration(s).

Depending on the application and/or the properties of the target(s) T₁, T₂, it may be beneficial to arranged one or more radar reflectors at target locations.

According to examples, the transceiver 9 may be configured to generate and transmit an electromagnetic transmit signal S_{T} exhibiting a time-varying frequency, and to receive an electromagnetic reflection signal S_{R} resulting from reflection of the transmit signal S_{T} at the target(s) T₁, T₂. The transmit signal S_{T} may have a carrier frequency higher than 40 GHz, such as higher than 70 GHz. The processing circuitry 13 may be configured to form a measurement signal indicative of a difference between the transmit signal S_{T} and the reflection signal S_{F}, and determine a distance indication for one or more of the targets T₁, T₂ based on the measurement signal. For example, the transmit signal S_{T} and the reflection signal S_{R} from reflection of the transmit signal S_{T} at the targets T1, T2 may first be combined to form a so-called intermediate frequency signal S_{IF}, using techniques that are, *per se*, well-known in the art of FMCW-type radar level gauge systems. Thereafter, a phase of the intermediate frequency signal S_{IF} may be determined. According to embodiments of the invention, this may be done by transforming the intermediate frequency signal S_{IF} to the frequency domain, for example using FFT, identifying the frequency differences corresponding to reflections at the respective targets T₁, T₂, and determining the phase of the intermediate frequency signal S_{IF} for each of these frequency differences. For the small changes in distance resulting from vibration, the change of the phase can be used to unambiguously determine the change in distance with high accuracy.

The person skilled in the art realizes that the present invention by no means is limited to the preferred embodiments described above. On the contrary, many modifications and variations are possible within the scope of the appended claims.

## Claims

1. A vibration estimation system for estimating vibration of at least one target, comprising:
a transceiver configured to generate, transmit, and receive electromagnetic signals;
a radiating antenna coupled to the transceiver and arranged and configured to radiate an electromagnetic transmit signal from the transceiver in a transmission direction with a radiation pattern comprising a main lobe having a distance-dependent extension in a plane perpendicular to the transmission direction, and to return to the transceiver an electromagnetic reflection signal resulting from reflection of the transmit signal at the at least one target, when the at least one target is located within the distance-dependent extension of the main lobe of the transmit signal;
processing circuitry coupled to the transceiver and configured to estimate the vibration of the target based on a difference between the transmit signal and the reflection signal; and
an aiming arrangement arranged and configured to provide a visible aiming pattern visually indicating the distance-dependent extension of the main lobe of the transmit signal.

2. The vibration estimation system according to claim 1, wherein the aiming arrangement is mechanically coupled to the radiating antenna, in such a way that movement of the radiating antenna results in corresponding movement of the aiming arrangement.

3. The vibration estimation system according to claim 1 or 2, wherein the aiming arrangement comprises a laser.

4. The vibration estimation system according to claim 3, wherein the aiming arrangement comprises a holographic pattern generator arranged modify light emitted by the laser to form the aiming pattern.

5. The vibration estimation system according to claim 3, wherein the aiming arrangement comprises an actuator moving the laser to form the aiming pattern.

6. The vibration estimation system according to any one of the preceding claims, wherein the aiming pattern comprises a plurality of concentric geometric forms substantially coinciding with the distance-dependent extension of the main lobe of the transmit signal.

7. The vibration estimation system according to any one of the preceding claims:
the transmit signal exhibiting a time-varying frequency;
the transceiver being configured to form a measurement signal indicative of the difference between the transmit signal and the reflection signal; and
the processing circuitry being configured to estimate the vibration of the target based on the measurement signal.

8. The vibration estimation system according to claim 7:
the transceiver being configured to mix the transmit signal and the reflection signal to form the measurement signal; and
the processing circuitry being configured to:
sample the measurement signal, resulting in a sampled data set;
perform FFT on the sampled data set, resulting in an FFT data set; and
estimate the vibration of the target based on the FFT data set.

9. The vibration estimation system according to claim 7 or 8, the measurement signal being indicative of a phase difference between the transmit signal and the reflection signal.

10. A method of estimating vibration of a target, using a vibration estimation system comprising a transceiver, a radiating antenna coupled to the transceiver; processing circuitry coupled to the transceiver; and an aiming arrangement, the method comprising:
generating, by the transceiver, an electromagnetic transmit signal;
radiating, by the radiating antenna, the transmit signal in a transmission direction with a radiation pattern comprising a main lobe having a distance-dependent extension in a plane perpendicular to the transmission direction;
returning, by the radiating antenna to the transceiver, an electromagnetic reflection signal resulting from reflection of the transmit signal at the at least one target, when the at least one target is located within the distance-dependent extension of the main lobe of the transmit signal;
estimating, by the processing circuitry, the vibration of the target based on a difference between the transmit signal and the reflection signal; and
providing, by the aiming arrangement, a visible aiming pattern visually indicating the distance-dependent extension of the main lobe of the transmit signal.

11. The method according to claim 10, wherein:
the aiming arrangement comprises a laser; and
the method comprises moving the laser to form the aiming pattern.

12. The method according to claim 10 or 11, the transmit signal exhibiting a time-varying frequency, and the method comprising:
forming a measurement signal indicative of the difference between the transmit signal and the reflection signal; and
estimating the vibration of the target based on the measurement signal.

13. The method according to claim 12, comprising:
forming the measurement signal by mixing the transmit signal and the reflection signal;
sampling the measurement signal, resulting in a sampled data set;
performing FFT on the sampled data set, resulting in an FFT data set; and
estimating the vibration of the target based on the FFT data set.

14. The method according to claim 12 or 13, the measurement signal being indicative of a phase difference between the transmit signal and the reflection signal.
